(19) Europäisches Patentamt
European Patent Office
Office européen des brevets

(11) EP 3 345 952 A1

(12) EUROPEAN PATENT APPLICATION
published in accordance with Art. 153(4) EPC

(43) Date of publication:
11.07.2018 Bulletin 2018/28

(21) Application number: 16841766.5

(22) Date of filing: 29.08.2016

(51) Int Cl.:
C08G 63/60 (2006.01)
C10M 129/78 (2006.01)
C10M 145/22 (2006.01)
C10M 169/04 (2006.01)
C10M 101/04 (2006.01)
C10M 105/36 (2006.01)
C10M 105/38 (2006.01)
C10N 20/00 (2006.01)
C10N 20/02 (2006.01)
C10N 30/00 (2006.01)
C10N 30/02 (2006.01)
C10N 30/08 (2006.01)
C10N 40/02 (2006.01)
C10N 40/04 (2006.01)
C10N 40/08 (2006.01)
C10N 40/12 (2006.01)
C10N 40/14 (2006.01)
C10N 40/20 (2006.01)
C10N 40/25 (2006.01)
C10N 40/30 (2006.01)
C10N 50/10 (2006.01)

(86) International application number:
PCT/JP2016/075129

(87) International publication number:
WO 2017/038734 (09.03.2017 Gazette 2017/10)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 31.08.2015 JP 2015170440

(71) Applicant: Mitsui Chemicals, Inc.
Minato-ku
Tokyo 105-7122 (JP)

(72) Inventors:
- KIDA, Mariko
Sodegaura-shi
Chiba 299-0265 (JP)
- EBATA, Hiroki
Rye Brook, New York 10573 (US)
- KANESHIGE, Ryousuke
Sodegaura-shi
Chiba 299-0265 (JP)

(74) Representative: Hoffmann Eitle
Patent- und Rechtsanwälte PartmbB
Arabellastraße 30
81925 München (DE)

# (54) COPOLYMER AND LUBRICATING OIL COMPOSITION

(57) The present invention addresses the problem of providing a lubricating oil composition having excellent heat resistance (suppression of discoloration in heating) and tackiness while maintaining excellent viscosity properties of a lubricating oil composition using a ricinolic acid polymer. The present invention provides a copolymer (B) containing structural units (a) derived from ricinolic acid, structural units (b) derived from an aliphatic dicarboxylic acid and structural units (c) derived from a diol having 2 to 10 carbon atoms in a specific ratio and having a specific intrinsic viscosity, and provides a lubricating oil composition containing a base oil and the copolymer (B) and having a mass ratio (mass of (A) /mass of (B)) of the base oil (A) to the copolymer (B) of 60/40 to 99.5/0.5.

EP 3 345 952 A1

**Description**

Technical Field

The present invention relates to a copolymer satisfying specific requirements, a lubricating oil composition containing the copolymer in a specific amount, and uses thereof.

Background Art

In general, petroleum products have a so-called temperature dependence of viscosity that the viscosity greatly varies with a change of temperature. Lubricating oils also have a temperature dependence of viscosity, and the temperature dependence of viscosity is preferably smaller. For the purpose of decreasing the temperature dependence of viscosity, a polymer soluble in a lubricating base oil is used as a viscosity index improver. As a typical viscosity modifier, a mineral oil solution of an olefin copolymer or a polymer of polymethacrylic acid ester (referred to as "PMA" hereinafter) is known.

On the other hand, from increase in awareness of global environmental problems in recent years, development of products reduced in burden on the environment has been desired in various industries. Such a desire is no exception also in the case of lubricating oil compositions, and various lubricating oil compositions having biodegradability have been proposed.

For example, a lubricating oil composition for grease or engine oil, which contains, as a base oil, a vegetable oil such as soybean oil or rapeseed oil or a synthetic ester such as polyol, has been proposed (see, for example, non patent document 1).

Such a lubricating oil composition, however, has a lowviscosity as compared with conventional lubricating oil compositions, and therefore, the range of use is limited.

Moreover, the lubricating oil composition containing a vegetable oil as a base oil has problems in storage properties and stability at low temperatures. When a viscosity modifier such as OCP (olefin copolymer) -based viscosity modifier is introduced into such a lubricating oil composition, this viscosity modifier exhibits poor solubility in a vegetable oil, so that application of this viscosity modifier is difficult.

By selecting a PMA (polymethacrylate) -based viscosity modifier as a viscosity modifier of a lubricating oil composition containing a vegetable oil or a synthetic ester as a base oil, solubility of the viscosity modifier in the base oil is improved. However, the PMA-based viscosity modifier contains, as a diluent oil, a mineral oil having low biodegradability in an amount of not less than 50% by mass, and therefore, biodegradability of the lubricating oil composition is significantly lowered.

On the other hand, in a patent document 1, an attempt to use a ricinolic acid polymer as a viscosity modifier to be added to a lubricating oil composition is disclosed. The ricinolic acid polymer used in this patent document 1 is a polymer obtained by homopolymerizing only a ricinolic acid ester derivative or copolymerizing a ricinolic acid ester derivative and a hydroxycarboxylic acid ester derivative. In the patent document 1, it is described that by adopting such a ricinolic acid polymer as a viscosity modifier, the resulting lubricating oil composition not only exhibits viscosity properties (viscosity index improving effect) and friction properties equal to or higher than those in the case of using a PMA-based viscosity modifier but also has remarkably excellent biodegradability.

Citation List

Patent Literature

Patent document 1: WO 2009/148110

Non Patent Literature

Non patent document 1: Junkatsu Keizai (Journal of Economic Maintenance Tribology), December issue, p. 22 (2007)

Summary of Invention

Technical Problem

The present inventors have studied, and as a result, it has been newly found that the lubricating oil composition using a ricinolic acid polymer as a viscosity modifier has room for improvement in discoloration resistance in heating

and tackiness. Typically, a lubricating oil composition is required not to be readily discolored even when heated, and is desired to have high tackiness in order to maintain adhesion to a sliding portion and to prevent scattering and sagging.

On the other hand, as workability in the preparation of a lubricating oil composition, handleability in the introduction of a viscosity modifier into a container and solubility of a viscosity modifier in a base oil usually tend to become excellent as the intrinsic viscosity is decreased, and it has been found that there is room for further improvement in handleability and solubility balanced with the intrinsic viscosity.

Accordingly, it is a problem to provide a lubricating oil composition having excellent heat resistance (suppression of discoloration in heating) and tackiness while maintaining excellent biodegradability and viscosity properties of a lubricating oil composition using a ricinolic acid polymer. Moreover, it is a problem to provide a polymer that makes it possible to provide such a lubricating oil composition and can be used as a viscosity modifier exhibiting excellent handleability and solubility in a base oil in the preparation of a lubricating oil composition.

Solution to Problem

In order to solve the above problems, the present inventors have earnestly studied. As a result, they have found that the above problems can be solved by adopting, as a viscosity modifier, a specific copolymer containing specific structural units in a specific ratio in addition to the structural units derived from ricinolic acid, and they have accomplished the present invention.

That is to say, the present invention relates to the following [1] to [16] .

[1] A copolymer (B) satisfying the following requirements (B1) to (B3) :

(B1) the copolymer (B) contains
structural units (a) derived from ricinolic acid,
structural units (b) derived from an aliphatic dicarboxylic acid, and
structural units (c) derived from a diol having 2 to 10 carbon atoms;
(B2) when the total of the structural units (a), (b) and (c) is 100% by mol, the content of the structural units (a) is 20 to 90% by mol, the content of the structural units (b) is 5 to 40% by mol, and the content of the structural units (c) is 5 to 40% by mol; and
(B3) the copolymer (B) has an intrinsic viscosity [IV] of in the range of 0.1 to 2.0 dl/g.

[2] A lubricating oil composition containing a base oil (A) and the copolymer (B) according to the above [1] and having a mass ratio (mass of (A) /mass of (B)) of the base oil (A) to the copolymer (B) of 60/40 to 99.5/0.5.
[3] The lubricating oil composition according to the above [2], wherein the base oil (A) is a vegetable oil and/or a synthetic ester.
[4] The lubricating oil composition according to the above [3], wherein the synthetic ester is a diester or a polyol ester.
[5] The lubricating oil composition according to the above [3] or [4], wherein the synthetic ester is an aliphatic diester or an aliphatic polyol ester.
[6] The lubricating oil composition according to any one of the above [2] to [5], wherein in the requirement (B2), a molar ratio ((b)/(c)) of the structural units (b) to the structural units (c) is 0.9 to 1.1.
[7] The lubricating oil composition according to any one of the above [2] to [6], wherein in the requirement (B2), the content of the structural units (a) is 40 to 90% by mol.
[8] The lubricating oil composition according to any one of the above [2] to [7], wherein in the requirement (B3), the intrinsic viscosity [IV] is in the range of 0.3 to 1.5 dl/g.
[9] The lubricating oil composition according to any one of the above [2] to [8], further containing at least one additive (C) selected from the group consisting of an antioxidant, an extreme pressure agent, a rust preventive, a metal deactivator, an antiwear additive, an antifoaming agent, a detergent dispersant and a pour point depressant.
[10] The lubricating oil composition according to any one of the above [2] to [9], wherein the aliphatic dicarboxylic acid is sebacic acid.
[11] The lubricating oil composition according to any one of the above [2] to [10], wherein the diol having 2 to 10 carbon atoms is 1,4-butanediol.
[12] A gear oil composed of the lubricating oil composition according to any one of the above [2] to [11] .
[13] A hydraulic oil composed of the lubricating oil composition according to any one of the above [2] to [11].
[14] An engine oil composed of the lubricating oil composition according to any one of the above [2] to [11].
[15] A grease composed of the lubricating oil composition according to any one of the above [2] to [11].
[16] A machining oil composed of the lubricating oil composition according to any one of the above [2] to [11].

Advantageous Effects of Invention

According to the present invention, a copolymer having excellent workability (handleability, solubility) and biodegradability can be provided as a viscosity modifier of a lubricating oil composition. Moreover, by using the copolymer, a lubricating oil composition having all of shear stability, low-temperature fluidity, heat resistance (suppression of discoloration in heating) and tackiness can be provided.

Description of Embodiments

Hereinafter, constituent features of the copolymer and the lubricating oil composition according to the present invention are described in detail.

[Base oil (A)]

The lubricating oil composition of the present invention contains a base oil (A). Examples of types of the base oils (A) in the present invention include vegetable oils, synthetic esters and low-molecular weight poly-$\alpha$-olefins. Of these, vegetable oils and synthetic esters are preferable. In this case, the base oil (A) may be a vegetable oil, or may be a synthetic oil, or may be a combination of them.

The synthetic ester used as the base oil (A) is different from the copolymer (B) described later. That is to say, in the present invention, an ester which can fall into both the synthetic ester that can be used as the base oil (A) and the copolymer (B) described later is treated as falling into the copolymer (B) described later.

Preferred examples of the vegetable oils include rapeseed oil, soybean oil, castor oil, palm oil, sunflower oil, safflower oil, corn oil, meadowfoam oil, rice bran oil, olive oil and jojoba oil. Of these, rapeseed oil, soybean oil, castor oil and palm oil are more preferable. These vegetable oils may be used singly or in combination of two or more kinds. These vegetable oils are excellent in biodegradability.

On the other hand, preferred examples of the synthetic esters include diesters and polyol esters. Adoption of any of these synthetic esters as the base oil (A) is preferable because the resulting lubricating oil composition can be used under wide temperature range conditions.

Preferred examples of the diesters among the above diesters and polyol esters include aliphatic diesters, such as di (2-ethylhexyl) sebacate, dioctyl adipate, dioctyl dodecanedioate, diisodecyl adipate and dioctyl sebacate. Preferred examples of the polyol esters include aliphatic polyol esters, such as pentaerythritol tetraoleate, trimethylolpropane tripelargonate and neopentyl polyol fatty acid ester. Adoption of any of these aliphatic diesters and aliphatic diesters as the base oil (A) is preferable because the resulting lubricating oil composition can be used under conditions of wide temperature range from a low-temperature region (not higher than room temperature) to a high-temperature region (50°C to 100°C).

These synthetic esters may be used singly or in combination of two or more kinds.

As the base oil (A), a mixture of one or more vegetable oils and one or more synthetic esters may be used.

In order to obtain a lubricating oil composition having proper lubricity, the kinematic viscosity (in accordance with ASTM 445 kinematic viscosity test method) of the base oil (A) at 40°C is preferably 10 to 80 $mm^2/s$, and more preferably 14 to 60 $mm^2/s$.

In order to obtain a lubricating oil composition having proper fluidity in the low-temperature region (not higher than room temperature), the pour point (in accordance with measuring method of JIS K2269) of the base oil (A) is preferably 0 to -50°C.

[Copolymer (B)]

The lubricating oil composition according to the present invention contains a copolymer (B) as a viscosity modifier. In the present invention, the copolymer (B) satisfies the following requirements (B1) to (B3).

Requirement (B1): The copolymer (B) contains
structural units (a) derived from ricinolic acid,
structural units (b) derived from an aliphatic dicarboxylic acid, and
structural units (c) derived from a diol having 2 to 10 carbon atoms.

[Structural units (a) derived from ricinolic acid]

The structural units (a) derived from ricinolic acid (sometimes referred to as "structural units (a)" simply hereinafter) in the present invention are structural units derived from ricinolic acid (12-hydroxy-cis-9-octadecenoic acid) or a ricinolic acid derivative. In the present invention, since the copolymer (B) contains such structural units (a), the resulting lubricating oil composition has excellent viscosity properties and storage stability, and besides, the composition can be expected to have high biodegradability.

Examples of the derivatives of ricinolic acid include various compounds that give structural units (a) derived from ricinolic acid through polymerization reaction, such as condensates of ricinolic acid, esterification products of ricinolic acid and carboxylic acids, esterification products of ricinolic acid and alcohols (e.g., ricinolic acid methyl ester), reaction products of ricinolic acid and epoxy compounds, 12 -hydroxystearic acid obtained by hydrogenating ricinolic acid and condensates thereof, esterification products of 12-hydroxystearic acid and carboxylic acids or alcohols (e.g., 12-hydroxystearic acid methyl ester).

In the present specification, monomer components corresponding to the structural units (a), that is, the above-mentioned ricinolic acid and derivatives of ricinolic acid are sometimes referred to as "monomer components (a')".

As described above, the derivatives of ricinolic acid include 12-hydroxystearic acid, esters thereof, etc., and therefore, the structural units (a) mentioned in the present invention are specifically structural units represented by the following formula (1) or the following formula (2).

[Chem. 1]

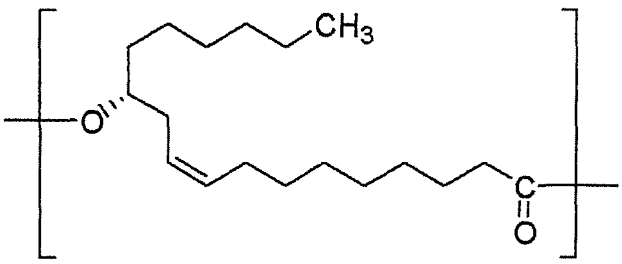

· · · (1)

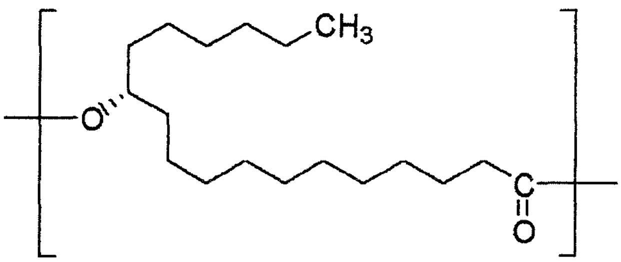

· · · (2)

Here, the proportion of the total of structural units derived from 12-hydroxystearic acid and ester derivatives thereof to all the structural units (a), that is, the proportion of the total of structural units represented by the formula (2) to all the structural units (a) is not specifically restricted, and the proportion of the total thereof is arbitrarily determined in the range of 0 to 100% by mol when the total of the structural units (a) derived from ricinolic acid (i.e., total of structural units represented by the formula (1) and structural units represented by the formula (2)) is 100% by mol. In the present invention, however, the structural units (a) derived from ricinolic acid preferably include structural units represented by the formula (1) because a lubricating oil composition having high transparency and high low-temperature fluidity tends to be easily obtained. In this sense, the above proportion is preferably 0 to 80% by mol and more preferably 0 to 60% by mol. When the proportion is in this preferred range, the copolymer (B) is excellent in fluidity at low temperatures and dispersibility in a base oil (particularly vegetable oil). However, in the case where the lubricating oil composition of the present invention is applied to uses that do not necessarily need high transparency, for example, in the case where the lubricating oil composition is applied to grease or the like, the above proportion does not necessarily need to be in the preferred range. For example, the structural units (a) derived from ricinolic acid may be composed of only the structural units represented by the formula (2).

[Structural units (b) derived from aliphatic dicarboxylic acid]

The structural units (b) derived from an aliphatic dicarboxylic acid (sometimes referred to as "structural units (b)" simply hereinafter) are derived from an aliphatic dicarboxylic acid or an aliphatic dicarboxylic acidester. The structural

units (b) mentioned in the present invention are specifically structural units formally having a structure obtained by removing -OH from two carboxyl groups contained in an aliphatic dicarboxylic acid.

It is preferable that the aliphatic dicarboxylic acid for deriving the structural units (b) be aliphatic because biodegradability of the resulting copolymer and solubility thereof in a base oil are not lowered.

The aliphatic dicarboxylic acid is not specifically restricted as long as it does not have elsewhere a functional group having reactivity in a system where ester polymerization reaction is performed, e.g., hydroxyl group, and the aliphatic dicarboxylic acids may be used singly or in combination of two or more kinds. Specific examples thereof include malonic acid (number of carbon atoms: 3), dimethylmalonic acid (number of carbon atoms: 5), succinic acid (number of carbon atoms: 4), glutaric acid (number of carbon atoms: 5), adipic acid (number of carbon atoms: 6), 2-methyladipic acid (number of carbon atoms: 7), trimethyladipic acid (number of carbon atoms: 9), pimelic acid (number of carbon atoms: 7), 2,2-dimethylglutaric acid (number of carbon atoms: 7), 3,3-diethylsuccinic acid (number of carbon atoms: 8), suberic acid (number of carbon atoms: 8), azelaic acid (number of carbon atoms: 9) and sebacic acid (number of carbon atoms: 10) . On the other hand, examples of the aliphatic dicarboxylic acid esters include various esters of the above-described aliphatic dicarboxylic acids.

Of these, preferred are aliphatic dicarboxylic acids having 6 to 12 carbon atoms, and particularly preferred is sebacic acid.

In the present specification, monomer components corresponding to the structural units (b), that is, the above-described aliphatic dicarboxylic acids and aliphatic dicarboxylic acid esters are sometimes referred to as "aliphatic dicarboxylic acid components (b')".

[Structural units (c) derived from diol having 2 to 10 carbon atoms]

The structural units (c) derived from a diol having 2 to 10 carbon atoms (sometimes referred to as "structural units (c) " simply hereinafter) are specifically structural units formally having a structure obtained by removing -H from two hydroxyl groups contained in a diol having 2 to 10 carbon atoms. The diols having 2 to 10 carbon atoms for deriving the structural units (c) may be used singly or in combination of two or more kinds. Specific examples thereof include the following compounds.

The diols having 2 to 10 carbon atoms include aliphatic diols having 2 to 10 carbon atoms. Examples of such aliphatic diols include 1,2-ethanediol (ethylene glycol, number of carbon atoms: 2), 1,3-propanediol (trimethylene glycol, number of carbon atoms: 3), 1,2-propanediol (propylene glycol, number of carbon atoms: 3), 1,4-butanediol (tetramethylene glycol, number of carbon atoms: 4), 2,2-dimethylpropane-1,3-diol (neopentyl glycol, number of carbon atoms: 5), 1,6-hexanediol (hexamethylene glycol, number of carbon atoms: 6), 1,8-octanediol (octamethylene glycol, number of carbon atoms: 8) and 1,9-nonanediol (nonamethylene glycol, number of carbon atoms: 9).

Examples of side chain alkyl group-containing glycols among such aliphatic diols include 2-methyl-1,3-propanediol, 2-ethyl-1,3-propanediol, 2-hexyl-1,3-propanediol, 2-hexyl-1,6-propanediol, neopentyl glycol, 2-ethyl-2-methyl-1,3-propanediol, 2,2-diethyl-1,3-propanediol, 2-methyl-2-n-butyl-1,3-propanediol, 1,3-nonanediol and 2-methyl-1,8-octanediol.

Of the above diols, particularly preferred is 1,4-butanediol.

In the present specification, monomer components corresponding to the structural units (c), that is, the above-described diols having 2 to 10 carbon atoms are sometimes referred to as "diol components (c')".

As described above, the copolymer (B) for use in the present invention contains also the above structural units (b) and (c) in addition to the structural units (a). Since the copolymer (B) contains also the structural units (b) and (c), the resulting lubricating oil composition is excellent in heat resistance and handleability, more strictly, heat resistance and tackiness, as shown in the EXAMPLES described later. The reason why such an effect is obtained will be described later in "Characteristics of copolymer (B)" stated below.

[Other structural units]

The copolymer (B) for use in the present invention is preferably composed of only the above-described structural units (a) to (c), but as long as the effect of the present invention is not inhibited, the copolymer may further contain structural units that do not fall into any of the structural units (a) to (c) (referred to as "other structural units" hereinafter). Examples of the other structural units include structural units derived from various dicarboxylic acids or carboxylic acid esters that do not fall into the aforesaid aliphatic dicarboxylic acid components (b'), e.g., furandicarboxylic acids such as 2, 5-furandicarboxylic acid, alicyclic dicarboxylic acids such as 1,4-cyclohexanedicarboxylic acid and 1,3-cyclohexanedicarboxylic acid, and aromatic dicarboxylic acids such as terephthalic acid, isophthalic acid, 2-methylterephthalic acid and naphthalenedicarboxylic acid; structural units derived from aliphatic diols having 11 or more carbon atoms;

structural units derived from aromatic diols; polyhydric (tri- or higher hydric) alcohols such as trimethylolethane and glycerol; polyvalent (tri-or higher valent) carboxylic acids such as butanetricarboxylic acid and trimellitic acid; and oxydicarboxylic acids such as 4-hydroxyphthalic acid.

In the present specification, monomer components corresponding to the "other structural units", that is, the above-described various dicarboxylic acids or carboxylic acid esters that do not fall into the aliphatic dicarboxylic acid components (b'), aliphatic diols having 11 or more carbon atoms, aromatic diols, polyhydric (tri- or higher hydric) alcohols, polyvalent (tri- or higher valent) carboxylic acids and oxydicarboxylic acids, etc. are sometimes referred to as "other monomer components".

Requirement (B2) : When the total of the structural units (a), (b) and (c) is 100% by mol, the content of the structural units (a) is 20 to 90% by mol, the content of the structural units (b) is 5 to 40% by mol, and the content of the structural units (c) is 5 to 40% by mol.

The lower limit of the content of the structural units (a) is 20% by mol, as described above, but it is more preferably 30% by mol, still more preferably 40% by mol, and particularly preferably 50% by mol. It is preferable that the content of the structural units (a) be not less than 20% by mol because appropriate surface tackiness is imparted. A content of not less than 30% by mol is more preferable because the resulting composition is improved in viscosity properties and storage stability, namely haze of a base oil. A content of not less than 40% by mol is particularly preferable from the viewpoint of storage stability and also from the viewpoint of shear stability. On the other hand, the upper limit of the content of the structural units (a) is 90% by mol, but it is more preferably 85% by mol. It is preferable that the content of the structural units (a) be not more than 90% by mol from the viewpoints of heat resistance and tackiness of the resulting composition. Based on these, the content of the structural units (a) is preferably40 to 90% by mol, and more preferably 45 to 85% by mol.

The molar ratio ((b)/(c)) of the structural units (b) to the structural units (c) is preferably 0.9 to 1.1.

The molar ratio can be adjusted to the above range by changing the ratio between the ricinolic acid or ricinolic acid derivative, the aliphatic dicarboxylic acid and the diol having 2 to 10 carbon atoms introduced into the polymerization system in the production process described later.

The copolymer (B) according to the present invention is preferably composed of only the structural units (a) to (c), as described above, but the copolymer may contain other structural units as long as the effect of the present invention is not inhibited. When the copolymer (B) contains other structural units, the content of the other structural units in the copolymer (B) is preferably not more than 20% by mol, more preferably not more than 10% by mol, and particularly preferably not more than 5% by mol, with the proviso that the total of the structural units (a) to (c) and the other structural units is 100% by mol.

The contents of the structural units (a) to (c) and the "other structural units" can be determined by appropriate techniques such as NMR.

Requirement (B3) : The copolymer (B) has an intrinsic viscosity [IV] of in the range of 0.1 to 2.0 dl/g. The intrinsic viscosity is preferably 0.1 to 1.5 dl/g, more preferably 0.2 to 1.5 dl/g, still more preferably 0.2 to 1.0 dl/g, and particularly preferably 0.2 to 0.6 dl/g. Since the intrinsic viscosity is in the above range, the copolymer is excellent in workability, and the resulting composition is excellent not only in shear stability but also in other various properties.

The measurement conditions for the intrinsic viscosity [IV] are as described in the section of EXAMPLES. By using the copolymer (B) having an intrinsic viscosity [IV] of such a range, the resulting lubricating oil composition can be imparted with excellent thickening properties and viscosity index improving effect. When the base oil (A) is a vegetable oil, the resulting lubricating oil composition can be imparted with good low-temperature storage stability. The intrinsic viscosity [IV] can be adjusted to the above range by controlling the molecular weight of the copolymer (B).

The copolymer (B) for use in the present invention may be, if desired, a copolymer obtained by subjecting, to a treatment such as hydrogenation, a copolymer (BO) that is a copolymer (B) and that contains structural units represented by the formula (1) as the structural units (a).

[Characteristics of copolymer (B)]

The copolymer (B) of the present invention has a structure in which the number of ester linkages derived from a secondary hydroxyl group (hydroxyl group at the 12-position) is small as compared with a homopolymer of a ricinolic acid derivative and the distance between neighboring ester groups (distance represented by the number of carbon atoms of carbon chain) is relatively short. Since this means that thermally unstable linkages are few in the copolymer (B), this is believed to contribute to heat stability. Furthermore, it is believed that because of a high density of ester groups, the copolymer readily takes a compact structure through intermolecular interaction, and this contributes to workability (handleability and solubility).

Moreover, it is believed that since the copolymer (B) of the present invention has a large number of primary hydroxyl groups in the monomer components as compared with a homopolymer of a ricinonic acid derivative, the ester polymerization reaction can be promoted more stably, dehydration in the polymer is suppressed, and the quantity of

double bonds in the resulting copolymer is suppressed, whereby an effect of excellent heat stability is obtained.

In addition, it is believed that since the proportion of a ricinolic acid derivative having a long side chain in the copolymer (B) of the present invention is relatively low as compared with that in a homopolymer of a ricinolic acid derivate, the resulting lubricating oil composition can have excellent shear stability.

[Production process for copolymer (B)]

The copolymer (B) is obtained by subjecting compounds for deriving the structural units (a), (b) and (c), namely the monomer components (a'), the aliphatic dicarboxylic acid components (b') and the diol components (c'), to ester polymerization reaction. That is to say, the copolymer (B) is obtained by subjecting the aforesaid ricinolic acid or ricinolic acid derivative described in the section "Structural units (a) derived from ricinolic acid", the aforesaid aliphatic dicarboxylic acid or aliphatic dicarboxylic acid ester described in the section "Structural units (b) derived from aliphatic dicarboxylic acid", and the aforesaid diol having 2 to 10 carbon atoms described in the section "Structural units (c) derived from diol having 2 to 10 carbon atoms" to ester polymerization reaction with one another. When this ester polymerization reaction is carried out in the presence of the aforesaid various dicarboxylic acids, carboxylic acid esters, aliphatic diols having 11 or more carbon atoms, aromatic diols, polyhydric (tri-or higher hydric) alcohols, polyvalent (tri- or higher valent) carboxylic acids and oxydicarboxylic acids described in the section "Other structural units", a copolymer (B) also containing "other structural units" can be obtained.

As the production process, a hitherto known process, such as direct esterification process or transesterification process, can be applied.

In the direct esterification process, the copolymer can be obtained by directly polycondensing the monomer components (a'), the aliphatic dicarboxylic acid components (b') , the diol components (c') and the optional "other monomer components" in a conventional way. For example,
the monomer components (a'),
dicarboxylic acid components (the aforesaid aliphatic dicarboxylic acid components (b') and the aforesaid various dicarboxylic acids described in the section "Other structural units"), and
diols (the aforesaid diol components (c') and the aforesaid various diols described in the section "Other structural units") are heated under pressure, and while condensation water produced is removed out of the reaction system, a low-molecular weight condensate is prepared, and then the pressure in the reaction system is reduced in the presence of a polycondensation catalyst, such as a titanium compound, a germanium compound or an antimony compound, to distill off diols to the outside of the reaction system. By virtue of this, a high-molecular weight polyester resin can be produced. In this embodiment, the monomer components (a'), dicarboxylic acid components and diols are allowed to react with one another, but also in the case where polyhydric (tri- or higher hydric) alcohols and/or polyvalent (tri- or higher valent) carboxylic acids coexist as the "other monomer components", the reaction can be carried out in the same manner as above.

In the transesterification process, dialkyl esters corresponding to dicarboxylic acids may be used as starting materials. In this case, the corresponding dialkyl esters are adopted as the aliphatic dicarboxylic acid components (b'), and by directly polycondensing them together with the monomer components (a'), the diol components (c') and the optional "other monomer components" in a conventional way, the copolymer can be obtained. In this case, also with regard to the monomer components (a') and/or the aforesaid various dicarboxylic acids described in the section "Other structural units", the corresponding alkyl esters may be used. For example,
the monomer components (a'),
dialkyl esters of dicarboxylic acids (the aforesaid aliphatic dicarboxylic acid components (b') and the aforesaid various dicarboxylic acids described in the section "Other structural units"), and
diols (the aforesaid diol components (c') and the aforesaid various diols described in the section "Other structural units") are heated at normal pressure, and while alkyl alcohols produced are removed out of the reaction system, a low-molecular weight condensate is prepared, and then the pressure in the reaction system is reduced in the presence of a polycondensation catalyst, such as a titanium compound, a germanium compound or an antimony compound, to distill off diols to the outside of the reaction system. By virtue of this, a high-molecular weight polyester resin can be produced. In this embodiment, the monomer components (a'), dialkyl esters of dicarboxylic acids and diols are allowed to react with one another, but also in the case where polyhydric (tri- or higher hydric) alcohols and/or polyvalent (tri- or higher valent) carboxylic acids coexist as the "other monomer components", the reaction can be carried out in the same manner as above.

The esterification reaction in the direct esterification process and the transesterification process proceeds even in the absence of a catalyst, but it is preferable to use such a polyconensation catalyst as exemplified above.

Also in the production process using any of the direct esterification process and the transesterification process, in order to keep the reaction system in a homogeneous liquid state, it is preferable to promote the reaction while heating the reaction system in such a manner that the reaction temperature is not lower than the melting points of an oligomer

and a polyester produced. If it is necessary to increase the molecular weight (weight-average molecular weight), the copolymerization polyester resin obtained in the melt polymerization may be subj ected to solid phase polymerization, whereby the molecular weight can be increased.

The copolymer (B) of the present invention can be produced also by ester polymerization reaction by use of lipase. In this process, the copolymer can be obtained by polycondensing the monomer components (a'), the aliphatic dicarboxylic acid components (b'), the diol components (c') and the optional "other monomer components" in the presence of lipase. As the lipase, immobilized lipase derived from Burkholderia cepacia (e.g., Lipase PS-C Amano II (trade name) or PS-D Amano I (trade name), manufactured by Wako Pure Chemical Industries, Ltd.) is preferable, and in this case, the lipase is not easily deactivated even at a high temperature, so that the reaction temperature can be raised up to 90°C. Furthermore, it is preferable to carry out a batch process under bulk conditions as the reaction conditions using a reactor equipped with a stirrer. The reaction time is usually 4 to 7 days though it varies dependingupon the conditions such as catalyst concentration and polymerization temperature.

The ester polymerization reaction is a reversible reaction, and in order to promote an efficient polymerization reaction, it is preferable to successively remove an alcohol and water produced. Specifically, for example, the pressure in the reaction system is kept in a reduced pressure state, or a synthesis reaction is carried out while a moisture absorbent such as synthetic zeolite (e.g., Molecular Sieve 4A) is placed so as not to come into contact with the reaction system. By carrying out the polymerization reaction under such conditions, the polymerization reaction can be promoted simply and easily, and the copolymer (B) can be efficiently synthesized.

In the present invention, the proportions of the amounts of the monomer components (a'), the aliphatic dicarboxylic acid components (b'), the diol components (c') and the optional "other monomer components" added in each of such ester polymerization reactions as above can be properly controlled according to the contents of the structural units (a), (b) and (c) and the "other structural units" that should be attained in the copolymer (B).

The copolymer obtained by such ester polymerization reactions can be adopted as it is as the copolymer (B). However, by further carrying out hydrogenation reaction using an appropriate method hitherto known, hydrogen addition of a part or all of double bonds contained in the structural units (a) may be performed. For example, a copolymer (BO) that is a copolymer (B) and that contains structure units represented by the formula (1) as the structural units (a) is prepared first by ester polymerization reaction, and then the copolymer (BO) may be partially or completely hydrogenated, and the product obtained by such hydrogenation may be adopted as the copolymer (B)

[Lubricating oil composition]

In the rubricating oil composition according to the present invention, the mass ratio (mass of (A) /mass of (B)) of the base oil (A) to the copolymer (B) is 60/40 to 99.5/0.5, preferably 75/25 to 99/1, and more preferably 80/20 to 97/3. Since the base oil (A) and the copolymer (B) are contained in such a ratio in the lubricating oil composition, not only is good compatibility between the base oil (A) and the copolymer (B) obtained but also a thickening effect is imparted to the lubricating oil composition. Further, even under room temperature conditions, the lubricating oil composition can exhibit a proper viscosity index, and therefore, the composition has good fluidity. Furthermore, when the base oil (A) is a vegetable oil, low-temperature storage stability of the lubricating oil composition can be improved.

Since the lubricatingoil composition can be imparted with proper lubrication performance in the medium-temperature region (room temperature to 50°C), the kinematic viscosity (in accordance with ASTM D445) of the lubricating oil composition of the present invention at 40°C is preferably set to 50 to 700 $mm^2/s$, and more preferably 80 to 600 $mm^2/s$.

Moreover, since the lubricating oil composition can be imparted with proper lubrication performance in the high-temperature region (50°C to 100°C), the kinematic viscosity (in accordance with ASTM D445) of the lubricating oil composition of the present invention at 100°C is preferably set to 10 to 100 $mm^2/s$, and more preferably 15 to 70 $mm^2/s$.

In addition, since the lubricating oil composition not only can be used in a wide temperature range but also can maintain proper lubricity at each temperature, the viscosity index (in accordance with ASTM D2270) of the lubricating oil composition of the present invention is preferably set to 180 to 250, and more preferably 200 to 250.

The lubricating oil composition of the present invention can be expected to have high biodegradability because of its formulation. In the case where a lubricating oil composition is naturally scattered (naturally leaks), the composition is desired to be rapidly degraded (biodegraded) in the natural environment. Therefore, the biodegradation rate of the lubricating oil composition of the present invention based on the Modified MITI Test Method "OECD301C" is preferably not less than 40%, and more preferably not less than 60%.

[Additive (C)]

The lubricating oil composition of the present invention preferably contains, in addition to the base oil (A) and the copolymer (B), an additive (C) according to the intended purpose such as improvement in oxidation stability, rust prevention, extreme pressure properties or antifoaming properties.

Such an additive (C) is preferably at least one kind selected from the group consisting of an antioxidant, an extreme pressure agent, a rust preventive, a metal deactivator, an antiwear additive, an antifoaming agent, a detergent dispersant and a pour point depressant.

The total amount of the additives (C) added can be appropriately determined within limits not detrimental to the object of the present invention, but it is preferably 0.05 to 25% by mass based on 100% by mass of the lubricating oil composition.

[Antioxidant]

As the antioxidant for use in the lubricating oil composition of the present invention, a known antioxidant can be used, and specific examples thereof include amine-based antioxidants, such as di(alkylphenyl)amine (number of carbon atoms of alkyl group: 4 to 20), phenyl-α-naphthylamine, alkyldiphenylamine (number of carbon atoms of alkyl group: 4 to 20), N-nitrosodiphenylamine, phenothiazine, N,N'-dinaphthyl-p-phenylenediamine, acridine, N-methylphenothiazine, N-ethylphenothiazine, dipyridylamine, diphenylamine, phenolamine and 2,6-di-t-butyl-α-dimethylamino-para-cresol; phenol-based antioxidants, such as 2,6-d-t-butyl-para-cresol, 4,4'-methylenebis(2,6-di-t-butylphenol), 2,6-di-t-butyl-4-N,N-dimethylaminomethylphenol, 2,6-di-t-butylphenol and dioctyldiphenylamine; and organometal compound-based antioxidants, e.g., organoiron salts, such as iron octoate, ferrocene and iron naphthoate, organocerium salts, such as cerium naphthoate and cerium toluate, and organozirconium salts, such as zirconium octoate. Although the antioxidants may be used singly, they may be used in combination of two or more kinds.

[Extreme pressure agent]

As the extreme pressure agent for use in the lubricating oil composition of the present invention, a known extreme pressure agent can be used, and specific examples thereof include chlorine-based compounds, such as chlorinated paraffin, chlorinated diphenyl and chlorinated fatty acids; sulfur-based compounds, such as sulfurized fatty acids, sulfurized fatty acid esters, sulfurized animal oils, sulfurized vegetable oils, dibenzyl disulfide, synthetic polysulfides, amine salts or alkali metal salts of alkylthiopropionic acids, and amine salts or alkali metal salts of alkylthioglycolic acids; phosphorus-based compounds, such as phosphoric acid esters, acidic phosphoric acid esters, amine salts of acidic phosphoric acid esters, and chlorinated phosphoric acid esters and phosphorous acid esters; zinc dialkyldithiophosphate compounds or zinc diallyldithiophosphate compounds; organomolybdenum compounds; metallic soaps, such as lead naphthenate; organoboric acid esters and metal salts or amine salts thereof; and organophosphonic acid and metal salts or amine salts thereof.

To the lubricating oil composition of the present invention, one or more kinds of the extreme pressure agents can be added. When two or more kinds of the extreme pressure agents are added, they can be arbitrarily combined in such a manner that the resulting lubricating oil composition can have desired properties.

The content of the extreme pressure agent in the lubricating oil composition is preferably 0.5 to 10 parts by mass, and more preferably 2 to 8 parts by mass, based on 100 parts by mass of the base oil (A).

[Rust preventive]

Examples of the rust preventives for use in the lubricating oil composition of the present invention include petroleum sulfonate, alkylbenzene sulfonate, dinonylnaphthalene sulfonate, alkenyl succinic acid esters and polyhydric alcohol esters.

[Metal deactivator]

Examples of the metal deactivators for use in the lubricating oil composition of the present invention include benzotriazole and derivative thereof, and thiazole-based compounds.

[Antiwear additive]

Examples of the antiwear additives for use in the lubricating oil composition of the present invention include phosphorus-based compounds, organomolybudenum compounds, fatty acid ester compounds and aliphatic amine-based compounds.

Examples of the phosphorus-based compounds functioning as the antiwear additives include zinc alkyldithiophosphate, phosphoric acid, phosphorous acid, phosphoric acid monoesters, phosphoric acid diesters, phosphoric acid triesters, phosphorous acid monoesters, phosphorous acid diesters, phosphorous acid triesters, salts of phosphoric (phosphorous) acid esters, thiophosphoric acid or thiophosphorous acid and esters thereof, and mixtures of these

compounds. Of these, zinc alkyldithiophosphate is preferably used, and it usually contains a hydrocarbon group having 2 to 30 carbon atoms, preferably 3 to 20 carbon atoms. Examples of the hydrocarbon groups having 2 to 30 carbon atoms include alkyl group, cycloalkyl group, alkylcycloalkyl group, alkenyl group, aryl group, alkylaryl group and arylalkyl group.

Examples of the organomolybdenum-based compounds functioning as the antiwear additives include molybdenum dithiocarbamate, molybdenum dithiophosphate and molybdic acid amine salts. In particular, molybdenum dithiocarbamate is preferable.

[Antifoaming agent]

As the antifoaming agent for use in the lubricating oil composition of the present invention, a known antifoaming agent can be used, and examples thereof include silicon-based antifoaming agents, such as dimethylsiloxane and silica gel dispersion; and alcohol-based or ester-based antifoaming agents.

[Detergent dispersant]

As the detergent dispersant for use in the lubricating oil composition of the present invention, a known detergent dispersant can be used, and examples thereof include metal sulfonates, such as calcium sulfonate, magnesium sulfonate and barium sulfonate, thiophosphonate, phenate, salicylate, succinic acid imide, benzylamine, and succinic acid ester.

[Pour point depressant]

Example of the pour point depressants include alkylated naphthalene, (co)polymers of alkyl methacrylates, (co)polymers of alkyl acrylates, copolymers of alkyl fumarates and vinyl acetate, $\alpha$-olefin polymers, and copolymers of $\alpha$-olefins and styrene. In particular, (co)polymers of alkyl methacrylates and (co)polymers of alkyl acrylates can be mentioned.

[Production process for lubricating oil composition]

The lubricating oil composition of the present invention is obtained by mixing/kneading the base oil (A) and the prescribed copolymer (B), and if necessary, the additive (C), etc., inaprescribed ratio.

For mixing/kneading the base oil (A) and the copolymer (B), and if necessary, the additive (C), etc., these components may be added to a mixing/kneading apparatus at the same time or in an arbitrary order.

As a mixing/kneading means, a known mixing/kneading apparatus of tank blending system, automatic blending system or the like can be used.

The mixing/kneading may be carried out at ordinary temperature, but in order to improve homogeneity of each component in the lubricating oil composition, it is preferable to mix/knead the components after heating or while heating at 60 to 80°C

[Uses of lubricating oil composition]

The lubricating oil composition of the present invention not only has good viscosity properties and friction properties but also is excellent in biodegradability, and therefore, the composition is extremely useful as a lubricating oil composition for various uses.

Preferred examples of specific uses include gear oil, hydraulic oil, engine oil, grease, machining oil, sliding surface oil, electrical insulating oil, turbine oil, gear oil, air compressor oil, compressor oil, vacuum pump oil, bearing oil, thermal oil, mist oil, refrigerator oil and rock drill oil. Specific examples of engine oils include 2-cycle engine oil, gasoline engine oil and diesel engine oil. Specific examples of machining oils include cutting oil, grinding oil, punching oil, drawing processing oil, press oil, drawing oil, rolling oil and forging oil.

Examples

The present invention is described in more detail with reference to the following examples, but it should be construed that the present invention is in no way limited to those examples.

[Base oil]

Properties of the following base oils used in Examples and Comparative Examples are shown in Table 1

described below.

A-1: rapeseed oil, manufactured by MP Biomedicals

A-2: DIDA (diisodecyl adipate), manufactured by Daihachi Chemical Industry Co., Ltd.

A-3: H-334R (neopentyl polyol fatty acid ester), manufactured by NOF Corporation

[Table 1]

Table 1

| | | Kinematic viscosity ($mm^2/s$) 40°C | Kinematic viscosity ($mm^2/s$) 100°C | Viscosity index |
|---|---|---|---|---|
| A-1 | Rapeseed oil | 47.1 | 10.08 | 208 |
| A-2 | Synthetic ester (DIDA) | 14.18 | 3.62 | 141 |
| A-3 | Synthetic polyol ester (H-334R) | 19.69 | 4.41 | 137 |

[Production of copolymer and evaluation method]

Property measurement conditions and production conditions for copolymers, and evaluation criteria of properties of lubricating oil compositions are described below.

[Measurement of content of structural units for constituting (co) polymer]

The content of structural units for constituting a (co) polymer obtained in each of the production examples described below is determined by the following procedure.

An ECA500 type nuclear magnetic resonance device manufactured by JEOL Ltd. was used, and as a solvent, deuterated chloroform was used. The sample concentration was set to 35 mg/0.5 mL, and the measuring temperature was set to 50°C. The measurement was carried out under the conditions of observed nuclei of 1 H (500 MHz), a sequence of single pulse, a pulse width of 6.3 μsec (45° pulse), a repetition time of 8.5 sec and a number of scans of 394 times, using a hydrogen signal of tetramethylsilane as a reference value of chemical shift. Each peak was assigned by a conventional method.

[Measurement of intrinsic viscosity (IV)]

Intrinsic viscosity (IV: Intrinsic Viscosity) is determined by dissolving 0.5 g of a sample (polyester resin) in 100 ml of a mixed solution of 1,1,2,2-tetrachloroethane/phenol (50% by mass/50% by mass), then dissolving the sample in the mixed solution under heating at 135 °C for 40 minutes, thereafter cooling the solution with water at 25 °C, measuring a solution viscosity at 25 °Cbytheuseof an Ubbelohde viscometer and calculating the intrinsic viscosity.

The intrinsic viscosity is a value calculated by the following formula.

$$[\eta] = \eta_{SP}/[C(1+k\eta_{SP})]$$

$[\eta]$: intrinsic viscosity (dl/g)
$\eta_{SP}$: specific viscosity
C: sample concentration (g/dl)
k: constant (inclination determined by measuring specific viscosities of samples (3 or more) different in solution concentration and plotting solution concentration as abscissa and $\eta_{SP}/C$ as ordinate)

Here, the specific viscosity $\eta_{SP}$ was determined in accordance with the following formula.

$$\eta_{SP} = (t-t0)/t0$$

t: flow time of sample solution (sec)
t0: flow time of solvent (sec)

[Melting point (Tm), glass transition temperature (Tg)]

Melting point (Tm) of the copolymer (B) was measured using a differential scanning calorimeter (DSC220C type, manufactured by Seiko Instruments Inc.) as a measuring device. Specifically, about 5 mg of the copolymer (B) was sealed in an aluminum pan for measurement and heated up to 150°C from room temperature at 10°C/min. The copolymer was maintained at 150 °C for 5 minutes and then cooled down to -100°C at 10 °C/min. After the copolymer was maintained at -100 °C for 5 minutes, the second heating up to 150°C at 10°C/min was carried out. A peak temperature (°C) in this second heating was defined as a melting point (Tm) of the copolymer, and a displacement point corresponding to glass transition was defined as a glass transition temperature (Tg).

[Workability (handleability)]

Workability of a (co)polymer in the case of transferring the (co) polymer contained in a container into a beaker containing a base oil therein was evaluated based on the following criteria.

◎: By tilting the container at 23°C, the (co)polymer can be taken out.
○: By using a spatula at 23°C, the (co)polymer can be taken out.
Δ: By heating the (co)polymer to 50°C, the (co)polymer can be taken out.

[Workability (solubility)]

After a (co)polymer was introduced into a base oil, the (co) polymer and the base oil were stirred at 60°C for 5 minutes, and the resulting mixture was visually evaluated based on the following criteria.
◎: The mixture is completely homogeneous.
○: Not less than 80% of the mixture is homogeneous.
Δ: About a half of the mixture is homogeneous.

[Biodegradability]

Biodegradability was measured in accordance with the Modified MITI Test Method "OECD301C" . According to the Eco Mark Certification Criteria revised in July, 1998, the biodegradability is required to be not less than 60%.

[Example 1-1] (Production of copolymer B-1)

40.0 Parts by mass of ricinolic acid, 5.8 parts by mass of sebacic acid and 5.2 parts by mass of 1, 4-butanediol were heated up to 210°C from ordinary temperature over a period of 30 minutes. After the temperature reached 210°C, 0.20 part by mass of titanium tetrabutoxide and 0.03 part by mass of a 20 wt% aqueous solution of ethylammonium hydroxide were added, and the resulting mixture was maintained as it was at 210°C for 5 hours, thereby carrying out esterification reaction.
After completion of the esterification reaction, 1.36 parts by mass of titanium tetrabutoxide were added as a polymerization catalyst, and while raising the temperature up to 230°C over a period of 60 minutes, the pressure was reduced down to 0.133 kPa (1 Torr), thereby carrying out polycondensation reaction. This polycondensation reaction was carried out while stirring the reaction mixture. Here, as the polycondensation reaction proceeded, stirring torque required for stirring the reaction mixture gradually increased. When the stirring torque reached a prescribed range, the polycondensation reaction was completed, and within 10 minutes, a polyester was withdrawn from the reaction vessel.

[Example 1-2] (Production of copolymer B-2)

40.0 Parts by mass of ricinolic acid, 10.2 parts by mass of adipic acid and 9.7 parts by mass of 1,4-butanediol were heated up to 210°C from ordinary temperature over a period of 30 minutes. The subsequent procedure was carried

out in the same manner as in Example 1-1 to give a polyester.

[Example 1-3] (Production of copolymer B-3)

40.0 Parts by mass of ricinolic acid, 13.6 parts by mass of sebacic acid and 9.7 parts by mass of 1,4-butanediol were heated up to 210°C from ordinary temperature over a period of 30 minutes. The subsequent procedure was carried out in the same manner as in Example 1-1 to give a polyester.

[Example 1-4] (Production of copolymer B-4)

20.0 Parts by mass of ricinolic acid, 19.6 parts by mass of 12-hydroxystearic acid, 13.6 parts by mass of sebacic acid and 9.7 parts by mass of 1,4-butanediol were heated up to 210°C from ordinary temperature over a period of 30 minutes. The subsequent procedure was carried out in the same manner as in Example 1-1 to give a polyester.

[Example 1-5] (Production of copolymer B-5)

30.5 Parts by mass of ricinolic acid, 20.6 parts by mass of sebacic acid and 13.3 parts by mass of 1,4-butanediol were heated up to 210°C from ordinary temperature over a period of 30 minutes. The subsequent procedure was carried out in the same manner as in Example 1-3 to give a polyester.

[Example 1-6 to Example 1-9] (Production of copolymers B-6 to B-9)

Polyesters were each obtained in the same manner as in Example 1-3, except that the polycondensation reaction was completed when the stirring torque reached a prescribed range. That is to say, Examples 1-6 to 1-9 are examples in each of which the same polycondensation reaction as in Example 1-3 was carried out except for changing the magnitude of the stirring torque that was a standard to complete the reaction, and these examples correspond to examples in each of which the degree of polymerization was changed.

[Example 1-10] (Production of copolymer B-10)

39.2 Parts by mass 12-hydroxystearic acid, 13.6 parts by mass of sebacic acid and 9.7 parts by mass of 1,4-butanediol were heated up to 210°C from ordinary temperature over a period of 30 minutes. The subsequent procedure was carried out in the same manner as in Example 1-1 to give a polyester.

[Comparative Example 1-1] (Production of ricinolic acid homopolymer P-1)

60.0 Parts by mass of ricinolic acid were heated up to 210°C from ordinary temperature over a period of 30 minutes. The subsequent procedure was carried out in the same manner as in Example 1 to give a polyester.

[Comparative Example 1-2] (Production of adipic acid/1,4-butanediol copolymer P-2)

30.0 Parts by mass of adipic acid and 29.2 parts by mass of 1,4-butanediol were heated up to 210°C from ordinary temperature over a period of 30 minutes. The subsequent procedure was carried out in the same manner as in Example 1 to give a polyester.

Composition and properties of the (co) polymers obtained in the form of polyesters in the production examples are set forth in the following Table 2-1 and Table 2-2. Here, the name of the compound described in the column of structural units in the following Table 2-1 and Table 2-2 represents a compound used for forming the structural units. Taking the copolymer (B-1) as an example, Table 2-1 indicates that the copolymer (B-1) contains 70% by mol of structural units obtained from ricinolic acid as the structural units (a), 15% by mol of structural units obtained from sebacic acid as the structural units (b), and 15% by mol of structural units obtained from 1,4-butanediol as the structural units (c).

From Table 2-1 and Table 2-2, it can be seen that the copolymers of Examples were each excellent in biodegradability. Moreover, it can be seen that as compared with the ricinolic acid homopolymer of Comparative Example 1-1, the copolymers of Examples had excellent workability against the magnitude of the intrinsic viscosity [IV] and are excellent in balance between the intrinsic viscosity [IV] and the workability.

[Table 2-1]

Table 2-1

| | | | | Ex. 1-1 | Ex. 1-2 | Ex. 1-3 | Ex. 1-4 | Ex. 1-5 | Ex. 1-6 | Ex. 1-7 | Ex. 1-8 | Ex. 1-9 |
|---|---|---|---|---|---|---|---|---|---|---|---|---|
| (Co) polymer | | | | B-1 | B-2 | B-3 | B-4 | B-5 | B-6 | B-7 | B-8 | B-9 |
| Composition | Structural units (a) | Ricinolic acid | [mol%] | 70 | 50 | 50 | 25 | 30 | 50 | 50 | 50 | 50 |
| | | 12-Hydroxystearic acid | [mol%] | - | - | - | 25 | - | - | - | - | - |
| | Structural units (b) | Adipic acid | [mol%] | - | 25 | - | - | - | - | - | - | - |
| | | Sebacic acid | [mol%] | 15 | - | 25 | 25 | 35 | 25 | 25 | 25 | 25 |
| | Structural units (c) | 1,4-Butanediol | [mol%] | 15 | 25 | 25 | 25 | 35 | 25 | 25 | 25 | 25 |
| Properties | Intrinsic viscosity [IV] | | dl/g | 0.27 | 0.44 | 0.49 | 0.45 | 0.55 | 0.10 | 0.20 | 0.28 | 0.38 |
| | Melting point (Tm) | | °C | - | - | - | - | - | - | - | - | - |
| | Glass transition temperature (Tg) | | °C | -74.4 | -69.5 | -73.2 | -68.3 | -71.2 | -73.0 | -73.0 | -73.0 | -73.0 |
| | Workability | Handleability | - | ◎ | ○ | Δ | ○ | Δ | ◎ | ◎ | ◎ | ◎ |
| | | Solubility | - | ◎ | ○ | Δ | ○ | Δ | ◎ | ◎ | ◎ | ◎ |
| | Biodegradability | | % | >60 | >60 | >60 | >60 | >60 | >60 | >60 | >60 | >60 |

"-" of the melting point (Tm) means "not detected".

[Table 2-2]

Table 2-2

| | | | | Ex. 1-10 | Comp. Ex. 1-1 | Comp. Ex. 1-2 |
|---|---|---|---|---|---|---|
| (Co)polymer | | | | B-10 | P-1 | P-2 |
| Composition | Structural units (a) | Ricinolic acid | [mol%] | - | 100 | - |
| | | 12-Hydroxystearic acid | [mol%] | 50 | - | - |
| | Structural units (b) | Adipic acid | [mol%] | - | - | 50 |
| | | Sebacic acid | [mol%] | 25 | - | - |
| | Structural units (c) | 1,4-Butanediol | [mol%] | 25 | - | 50 |
| Properties | Intrinsic viscosity [IV] | | dl/g | 0.29 | 0.31 | 0.51 |
| | Melting point (Tm) | | °C | -11 | - | 57.5 |
| | Glass transition temperature (Tg) | | °C | -57.7 | -74.8 | -60.3 |
| | Workability | Handleability | - | ○ | ○ | ◎ |
| | | Solubility | - | ○ | ○ | ◎ |
| | Biodegradability | | % | >60 | >60 | >60 |
| "-" of the melting point (Tm) means "not detected". | | | | | | |

[Evaluation method for lubricating oil composition]

Evaluation methods for (i) storage stability, (ii) viscosity properties (kinematic viscosity), (iii) viscosity properties (viscosity index), (iv) handleability and (v) heat resistance of the lubricating oil compositions are shown below.

(i) Storage stability

Ina 20 ml screw-cap bottle, 10 g of a lubricating oil composition obtained in each of Examples and Comparative Examples was placed, then heated at 50°C for 30 minutes and allowed to stand at room temperature. Thereafter, as storage stability, compatibility (fluidity, crystallization) under the temperature conditions of 25°C and 0°C was evaluated based on the following criteria.

○: The components of the lubricating oil composition are homogeneously dispersed and are not separated.
Δ The components of the lubricating oil composition are not separated, but fine particles slightly crystallized are observed.
×: The components of the lubricating oil composition are separated, and fine particles crystallized and solidified are observed.

(ii) Viscosity properties (kinematic viscosity)

Kinematic viscosity: kinematic viscosity at 100°C was measured in accordance with ASTM D445.

(iii) Viscosity properties (viscosity index)

Viscosity index: viscosity index was determined in accordance with ASTM D2270.

(iv) Shear stability (viscosity decrease rate)

The lubricating oil composition was irradiated with ultrasonic waves for 1 hour on the basis of the ultrasonic shear stability test method (JASO M347-95) defined by the Japanese Automotive Standards Organization (JASO), and

a decrease rate (%) of 40°C kinematic viscosity after the irradiation was evaluated.

The shear stability is a measure of a loss of kinematic viscosity due to molecular chain scission brought about when the copolymer component in the lubricating oil is subjected to shear at the metal sliding portion.

(v) Low-temperature fluidity (-10°C, -40°C viscosity)

-40°C Viscosity was measured by a Brookfield viscometer at -10°C and -40°C in accordance with ASTM D2983.

(vi) Tackiness (stringiness, tack strength)

Tackiness of the lubricating oil was evaluated in the following manner.

Stringiness was evaluated as follows. One drop of the sample was interposed between the thumb and the index finger at room temperature, then these fingers were separated from each other and contacted with each other, and occurrence of stringing was observed and evaluated. Tack strength was evaluated as follows. A metal bar with spiral groove, which had been attached to a stirrer, was immersed in the sample at room temperature, and when the metal bar was rotated at 300 rpm, the state of the sample raised up along the groove of the metal bar (height from the liquid surface, mm) was observed and evaluated.

Then, on the basis of the stringiness and the tack strength, tackiness of the lubricating oil was totally evaluated, and the evaluation result was judged by the following scores.

Score 5: The lubricating oil has sufficient stringiness and exhibits high tack strength (not less than 5 mm).
Score 4: The lubricating oil has stringiness and exhibits high tack strength (not less than 5 mm).
Score 3: The lubricating oil has stringiness and exhibits tackiness (1 to 5 mm).
Score 2: Stringing is slightly observed, and the lubricating oil exhibits tackiness (1 to 5 mm).
Score 1: Stringing is not observed, and the lubricating oil exhibits low tackiness (0 mm).

(vii) Heat resistance

A heat resistance test of a lubricating oil is usually carried out by adding an additive such as antioxidant to the oil.

To each of the lubricating oil compositions of Examples and Comparative Examples, 0.5% by weight of 2,6-di-tert-butyl-p-cresol was added, and it was dissolved therein to give lubricating oil compositions for heat resistance evaluation.

Subsequently, 40 mL of the above each sample was placed in a 50 mL glass cylindrical sample bottle and subjected to heat treatment for 500 hours using an oven at 120°C. On the basis of a change in color tone, a sample having a small change in color was judged to be excellent in heat resistance.

The evaluation result was judged by the following scores.

Score 5: A change in color is hardly observed.
Score 4: A slight change in color tone is found, and a color change to pale yellow is observed.
Score 3: A color change to light yellow is observed.
Score 2: A change in color tone is relatively big, and a color change to yellow is observed.
Score 1: A change in color tone is big, and a color change to dark brown is observed.

[Example 2-1]

The rapeseed oil (A-1) and the copolymer (B-1) were mixed in such a manner that the mass ratio became 90/10, thereby giving a lubricating oil composition. The results of property evaluation of the resulting lubricating oil composition are set forth in the following Table 3-1.

[Examples 2-2 to 2-8, Comparative Examples 2-1 to 2-4]

Mixing was carried out in accordance with the following Tables 3-1 and 3-2, thereby giving lubricating oil compositions. The evaluation results are all set forth in Tables 3-1 and 3-2.

[Example 2-9]

The rapeseed oil (A-1), the copolymer (B-3) and the copolymer (B-10) were mixed in such a manner that the mass ratio became 90/5/5, thereby giving a lubricating oil composition. The evaluation results are all set forth in Table 3-2.

[Example 2-10]

Using the synthetic polyol ester (A-3), mixing was carried out in a ratio shown in Table 3-2, thereby giving a lubricating oil composition. The evaluation results are all set forth in Table 3-1.

[Example 2-11 to Example 2-16, Comparative Example 2-5]

Using the synthetic ester (DIDA) (A-2), mixing was carried out in a ratio shown in Table 3-3, thereby giving lubricating oil compositions. The evaluation results are all set forth in Table 3-3 .

From Tables 3-1 and 3-2, it can be seen that the composition of Comparative Example 2-4 using a copolymer containing no structural unit derived from ricinolic acid was inferior in storage stability (compatibility) and tackiness. As compared with the composition of Comparative Example 2-3 using a ricinolic acid homopolymer, the compositions of Examples 2-1 to 2-9 using the same base oil (A-1) were each excellent not only in heat resistance but also in tack strength.

In Table 3 - 3, Examples and Comparative Example, in each of which the synthetic ester (A-2) was used as the base oil and the (co) polymer was added in such a manner that the kinematic viscosity (40°C) became about 100 $mm^2/s$, are compared. From Table 3-3, it can be seen that as compared with the composition of Comparative Example 2-5 using a ricinolic acid homopolymer, the compositions of Examples were each excellent in shear stability. Moreover, it can be seen that as the intrinsic viscosity of the copolymer (B) used was decreased, the shear stability tended to become more excellent. In addition, it can be seen that the composition of Example using a copolymer containing a large amount (70% by mol) of the structural units (a) derived from ricinolic acid was excellent in shear stability.

[Table 3-1]

Table 3-1

| | | | Ex. 2-1 | Ex. 2-2 | Ex. 2-3 | Ex. 2-4 | Ex. 2-5 | Ex. 2-6 | Ex. 2-7 |
|---|---|---|---|---|---|---|---|---|---|
| Base oil (A) | Type | [-] | A-1 | A-1 | A-1 | A-1 | A-1 | A-1 | A-1 |
| | Amount | [% by mass] | 90 | 90 | 95 | 90 | 80 | 90 | 90 |
| (Co)polymer (B) | Type | [-] | B-1 | B-2 | B-3 | B-3 | B-3 | B-4 | B-5 |
| | Amount | [% by mass] | 10 | 10 | 5 | 10 | 20 | 10 | 10 |
| Storage stability | Compatibility (25°C×10 days) | [-] | ○ | ○ | ○ | ○ | ○ | ○ | ○ |
| | Compatibility (0°C×10 days) | [-] | ○ | ○ | ○ | ○ | ○ | ○ | Δ |
| Viscosity properties | Kinematic viscosity (100°C) | $mm^2/s$ | 22.1 | 28.1 | 23.6 | 42.5 | 65.2 | 39.1 | 45.3 |
| | Kinematic viscosity (40 °C) | $mm^2/s$ | 106.9 | 137.2 | 113.8 | 204.3 | 318.2 | 189.2 | 218.2 |
| | Viscosity index | [-] | 212 | 217 | 214 | 225 | 232 | 222 | 225 |
| Shear stability | Viscosity decrease rate | % | 12.8 | 16.4 | 17.2 | 22.5 | 25.2 | 23.2 | 22.6 |

(continued)

| | | | Ex. 2-1 | Ex. 2-2 | Ex. 2-3 | Ex. 2-4 | Ex. 2-5 | Ex. 2-6 | Ex. 2-7 |
|---|---|---|---|---|---|---|---|---|---|
| Low-temperature fluidity | Viscosity (-10°C) | mPa·s | 3180 | 3280 | 3080 | 4280 | 6880 | 3400 | 4100 |
| | Viscosity (-40°C) | mPa·s | - | - | - | - | - | - | - |
| Tackiness | Stringiness, Tack strength | [score] | 5 | 5 | 4 | 5 | 5 | 5 | 4 |
| Heat resistance | Heating discoloration | [score] | 3 | 4 | 5 | 4 | 3 | 5 | 5 |
| -: No data | | | | | | | | | |

[Table 3-2]

Table 3-2

| | | | Ex. 2-8 | Ex. 2-9 | Ex. 2-10 | Comp. Ex. 2-1 | Comp. Ex. 2-2 | Comp. Ex. 2-3 | Comp. Ex. 2-4 |
|---|---|---|---|---|---|---|---|---|---|
| Base oil (A) | Type | [-] | A-1 | A-1 | A-3 | A-1 | A-1 | A-1 | A-1 |
| | Amount | [% by mass] | 90 | 90 | 90 | 100 | 50 | 90 | 90 |
| (Co)polymer (B) | Type | [-] | B-10 | B-3/B-10 | B-3 | - | B-1 | P-1 | P-2 |
| | Amount | [% by mass] | 10 | 5/5 | 10 | - | 50 | 10 | 10 |
| Storage stability | Compatibility (25°C×10 days) | [-] | ○ | ○ | ○ | - | ○ | ○ | × |
| | Compatibility (0°C×10 days) | [-] | ○ | ○ | ○ | - | ○ | ○ | × |
| Viscosity properties | Kinematic viscosity (100°C) | $mm^2/s$ | 21.6 | 26.1 | 24.1 | 8.09 | 130.7 | 18.3 | 24.5 |
| | Kinematic viscosity (40°C) | $mm^2/s$ | 116.7 | 139.4 | 116.6 | 35.5 | 732.3 | 88.5 | 45.1 |
| | Viscosity index | [-] | 213 | 224 | 214 | 213 | 229 | 214 | 211 |
| Shear stability | Viscosity decrease rate | % | 15.9 | 19.2 | 17.5 | 0 | - | 17.1 | - |
| Low-temperature fluidity | Viscosity (-10°C) | mPa·s | 3350 | 3080 | - | 920 | - | 3130 | - |
| | Viscosity (-40°C) | mPa·s | - | - | - | - | - | - | - |
| Tackiness | Stringiness, Tack strength | [score] | 5 | 5 | 5 | 1 | 3 | 3 | 2 |

(continued)

| | | | Ex. 2-8 | Ex. 2-9 | Ex. 2-10 | Comp. Ex. 2-1 | Comp. Ex. 2-2 | Comp. Ex. 2-3 | Comp. Ex. 2-4 |
|---|---|---|---|---|---|---|---|---|---|
| Heat resistance | Heating disco loration | [score] | 5 | 5 | 4 | 3 | 2 | 1 | 5 |
| -: No data | | | | | | | | | |

[Table 3-3]

Table 3-3

| | | | Ex. 2-11 | Ex. 2-12 | Ex. 2-13 | Ex. 2-14 | Ex. 2-15 | Ex. 2-16 | Comp. Ex. 2-5 |
|---|---|---|---|---|---|---|---|---|---|
| Base oil (A) | Type | [-] | A-2 | A-2 | A-2 | A-2 | A-2 | A-2 | A-2 |
| | Amount | [% by mass] | 90 | 66.5 | 73.3 | 77.9 | 84.8 | 82.8 | 83.0 |
| (Co)polymer (B) | Type | [-] | B-3 | B-6 | B-7 | B-8 | B-9 | B-1 | P-1 |
| | Amount | [% by mass] | 10 | 33.5 | 26.7 | 22.1 | 15.2 | 17.2 | 17.0 |
| Storage stability | Compatibility (25°C×10 days) | [-] | ○ | ○ | ○ | ○ | ○ | ○ | ○ |
| | Compatibility (0°C×10 days) | [-] | ○ | ○ | ○ | ○ | ○ | ○ | ○ |
| Viscosity properties | Kinematic viscosity (100°C) | $mm^2/s$ | 22.6 | 20.3 | 18.9 | 18.8 | 22.0 | 18.3 | 18.8 |
| | Kinematic viscosity (40°C) | $mm^2/s$ | 106.3 | 95.9 | 99.3 | 96.9 | 111.3 | 98.3 | 96.9 |
| | Viscosity index | [-] | 243 | 179 | 212 | 216 | 227 | 207 | 216 |
| Shear stability | Viscosity decrease rate | % | 17.3 | 1.0 | 1.9 | 4.6 | 12.2 | 19.3 | 24.1 |
| Low-temperature fluidity | Viscosity (-10°C) | mPa·s | 3050 | - | - | - | - | - | - |
| | Viscosity (-40°C) | mPa·s | 46500 | 198000 | 92800 | 62800 | 50100 | 36400 | 34900 |
| Tackiness | Stringiness, Tack strength | [score] | 5 | 4 | 4 | 5 | 5 | 5 | 4 |
| Heat resistance | Heating discoloration | [score] | 4 | - | - | - | - | - | - |
| -: No data | | | | | | | | | |

## Claims

**1.** A copolymer (B) satisfying the following requirements (B1) to (B3) :

(B1) the copolymer (B) comprises
structural units (a) derived from ricinolic acid,
structural units (b) derived from an aliphatic dicarboxylic acid, and
structural units (c) derived from a diol having 2 to 10 carbon atoms;
(B2) when the total of the structural units (a), (b) and (c) is 100% by mol, the content of the structural units (a) is 20 to 90% by mol, the content of the structural units (b) is 5 to 40% by mol, and the content of the structural units (c) is 5 to 40% by mol; and
(B3) the copolymer (B) has an intrinsic viscosity [IV] of in the range of 0.1 to 2.0 dl/g.

**2.** A lubricating oil composition comprising a base oil (A) and the copolymer (B) according to claim 1 and having a mass ratio (mass of (A) /mass of (B)) of the base oil (A) to the copolymer (B) of 60/40 to 99.5/0.5.

**3.** The lubricating oil composition according to claim 2, wherein the base oil (A) is a vegetable oil and/or a synthetic ester.

**4.** The lubricating oil composition according to claim 3, wherein the synthetic ester is a diester or a polyol ester.

**5.** The lubricating oil composition according to claim 3 or 4, wherein the synthetic ester is an aliphatic diester or an aliphatic polyol ester.

**6.** The lubricating oil composition according to any one of claims 2 to 5, wherein in the requirement (B2), a molar ratio ((b)/(c)) of the structural units (b) to the structural units (c) is 0.9 to 1.1.

**7.** The lubricating oil composition according to any one of claims 2 to 6, wherein in the requirement (B2), the content of the structural units (a) is 40 to 90% by mol.

**8.** The lubricating oil composition according to any one of claims 2 to 7, wherein in the requirement (B3), the intrinsic viscosity [IV] is in the range of 0.3 to 1.5 dl/g.

**9.** The lubricating oil composition according to any one of claims 2 to 8, further comprising at least one additive (C) selected from the group consisting of an antioxidant, an extreme pressure agent, a rust preventive, a metal deactivator, an antiwear additive, an antifoaming agent, a detergent dispersant and a pour point depressant.

**10.** The lubricating oil composition according to any one of claims 2 to 9, wherein the aliphatic dicarboxylic acid is sebacic acid.

**11.** The lubricating oil composition according to any one of claims 2 to 10, wherein the diol having 2 to 10 carbon atoms is 1,4 -butanediol.

**12.** A gear oil composed of the lubricating oil composition according to any one of claims 2 to 11.

**13.** A hydraulic oil composed of the lubricating oil composition according to any one of claims 2 to 11.

**14.** An engine oil composed of the lubricating oil composition according to any one of claims 2 to 11.

**15.** A grease composed of the lubricating oil composition according to any one of claims 2 to 11.

**16.** A machining oil composed of the lubricating oil composition according to any one of claims 2 to 11.

**INTERNATIONAL SEARCH REPORT**

International application No.
PCT/JP2016/075129

A. CLASSIFICATION OF SUBJECT MATTER
See extra sheet.

According to International Patent Classification (IPC) or to both national classification and IPC

B. FIELDS SEARCHED

Minimum documentation searched (classification system followed by classification symbols)
C08G63/00-63/91, C10M129/78, C10M145/22, C10M169/04, C10M101/04, C10M105/36, C10M105/38, C10N20/00, C10N20/02, C10N30/00, C10N30/02, C10N30/08, C10N40/02, C10N40/04, C10N40/08, C10N40/12, C10N40/14,

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 7-97590 A (Nisshin Fine Chemical Kabushiki Kaisha), 11 April 1995 (11.04.1995), claims; paragraph [0014]; synthesis examples 6 to 7 (Family: none) | 1-2,6-9,16 |
| X<br>Y | JP 2009-191175 A (Nagoya-Shi, Itoh Oil Chemicals Co., Ltd.), 27 August 2009 (27.08.2009), claims; paragraphs [0013] to [0014], [0018]; examples 5 to 6 (Family: none) | 1<br>2-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 November 2016 (10.11.16) | 22 November 2016 (22.11.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/075129

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2009/148110 A1 (Mitsui Chemicals, Inc.), 10 December 2009 (10.12.2009), claims; paragraphs [0039] to [0053]; examples & JP 5398708 B | 2-16 |
| X | JP 11-292961 A (Ajinomoto Co., Inc.), 26 October 1999 (26.10.1999), claims; example 4 (Family: none) | 1 |
| X | JP 2015-105316 A (Canon Inc.), 08 June 2015 (08.06.2015), claims; examples (Family: none) | 1 |
| X | JP 63-51391 A (Dainichiseika Color & Chemicals Mfg. Co., Ltd.), 04 March 1988 (04.03.1988), claims; examples 4, 6 (Family: none) | 1 |

Form PCT/ISA/210 (continuation of second sheet) (January 2015)

**INTERNATIONAL SEARCH REPORT**

International application No.
PCT/JP2016/075129

Continuation of A. CLASSIFICATION OF SUBJECT MATTER
(International Patent Classification (IPC))

*C08G63/60*(2006.01)i, *C10M129/78*(2006.01)i, *C10M145/22*(2006.01)i, *C10M169/04*(2006.01)i, *C10M101/04*(2006.01)n, *C10M105/36*(2006.01)n, *C10M105/38*(2006.01)n, *C10N20/00*(2006.01)n, *C10N20/02*(2006.01)n, *C10N30/00*(2006.01)n, *C10N30/02*(2006.01)n, *C10N30/08*(2006.01)n, *C10N40/02*(2006.01)n, *C10N40/04*(2006.01)n, *C10N40/08*(2006.01)n, *C10N40/12*(2006.01)n, *C10N40/14*(2006.01)n, *C10N40/20*(2006.01)n, *C10N40/25*(2006.01)n, *C10N40/30*(2006.01)n, *C10N50/10*(2006.01)n

(According to International Patent Classification (IPC) or to both national classification and IPC)

Continuation of B. FIELDS SEARCHED
Minimum documentation searched (International Patent Classification (IPC))

C10N40/20, C10N40/25, C10N40/30, C10N50/10

Minimum documentation searched (classification system followed by classification symbols)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009148110 A


### Non-patent literature cited in the description


- **JUNKATSU KEIZAI.** *Journal of Economic Maintenance Tribology,* December 2007, 22